(19) **Europäisches Patentamt**
**European Patent Office**
**Office européen des brevets**

(11) **EP 1 631 606 B1**

(12) **EUROPEAN PATENT SPECIFICATION**

(45) Date of publication and mention
of the grant of the patent:
**24.08.2011 Bulletin 2011/34**

(51) Int Cl.:
*C08G 18/09* (2006.01)        *C08G 18/22* (2006.01)
*C08G 18/48* (2006.01)        *C08G 18/79* (2006.01)

(21) Application number: **04734526.9**

(86) International application number:
**PCT/EP2004/050898**

(22) Date of filing: **24.05.2004**

(87) International publication number:
**WO 2004/111101 (23.12.2004 Gazette 2004/52)**

(54) **PROCESS FOR PREPARING A POLYISOCYANURATE POLYURETHANE MATERIAL**

VERFAHREN ZUR HERSTELLUNG EINES POLYISOCYANURAT-POLYURETHANMATERIALS

PROCEDE DE PREPARATION DE MATERIAU DE POLYISOCYANURATE POLYURETHANE

(84) Designated Contracting States:
**AT BE BG CH CY CZ DE DK EE ES FI FR GB GR HU IE IT LI LU MC NL PL PT RO SE SI SK TR**

(30) Priority: **12.06.2003 EP 03013241**

(43) Date of publication of application:
**08.03.2006 Bulletin 2006/10**

(73) Proprietor: **HUNTSMAN INTERNATIONAL LLC**
**Salt Lake City, Utah 84108 (US)**

(72) Inventors:
• **BLEYS, Gerhard Jozef**
**B-3001 Heverlee (BE)**
• **LEENSLAG, Jan Willem**
**B-3120 Tremelo (BE)**
• **VERBEKE, Hans Godelieve Guido**
**B-3210 Linden (BE)**

(74) Representative: **Baken, Philippus Johannes L. H. et al**
**Huntsman (Europe) BVBA**
**Intellectual Property Department**
**Everslaan 45**
**3078 Everberg (BE)**

(56) References cited:
**WO-A-02/00752          DE-A- 10 145 458**
**GB-A- 1 433 642          GB-A- 1 491 620**
**GB-A- 1 491 620          JP-A- 51 075 798**
**JP-A- 51 075 798          JP-A- 60 099 120**
**JP-A- 60 099 120          JP-A- 60 099 121**
**JP-A- 60 099 121          JP-A- 63 245 420**
**JP-A- 63 245 420          US-A- 4 424 288**
**US-A- 4 661 533**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention is related to a process for preparing a polyisocyanurate polyurethane material. More specifically the present invention is related to a process for preparing a polyisocyanurate polyurethane material using a polyether polyol having a high oxyethylene content and a polyisocyanate having a high diphenylmethane diisocyanate (MDI) content.

The preparation of polyurethane materials having a low and a high hardblock content from polyols having a high oxyethylene content, polyisocyanates comprising at least 85% by weight of 4,4'-MDI or a variant thereof and water has been disclosed in WO 02/06370 and WO 98/00450. The materials made are polyurethane elastomers. Further it has been disclosed in EP 608626 to produce shape memory polyurethane foams by reacting a polyisocyanate comprising a high amount of 4,4'-MDI and a polyol with a high oxyethylene content with water. WO 02/10249 discloses a process for preparing a polyurethane material having a high hard block content by reacting an MDI, a polyol having a high oxyethylene content and a cross-linker/chain extender.

These citations do not disclose a process for making a polyisocyanurate polyurethane material by reacting a polyisocyanate and a polyol at a high NCO-index and in the presence of a trimerisation catalyst.

Processes for making polyisocyanurate polyurethane materials, by reacting polyisocyanates and polyols at a high index in the presence of a trimerisation catalyst, as such have been widely described. See e.g. EP 922063 and WO 00/29459, WO 02/00752, EP 1173495, EP 745627, EP 587317, US 4247656, US 4129697 , DE 10145458, US 4661533, US 4424288 and GB 1433642.

Surprisingly we have found a novel class of polyisocyanurate polyurethane materials prepared from certain MDI-based polyisocyanates and certain polyols having a high oxyethylene content.
The invention allows for the production of materials having a high modulus, a high impact-, temperature- and flammability resistance, a short demould time and a high green strength. In particular the materials can be advantageously produced according to the reaction injection moulding (RIM) process.
Further, the process is suitable to make reinforced materials by using fillers like organic particles and mineral particles like nanoclay particles, $BaSO_4$ and $CaCO_3$ and/or fibers like glass fibers, natural fibers like flax, hemp and sisal fibers, synthetic fibers like polyamides (Kevlar™) and polyethylene (Spectra™). Such materials exhibit a good thermal stability. Still further the ingredients used to make the materials are easily processable and exhibit excellent curing characteristics allowing for short demould times.
Still further the materials obtained show lower levels of residual NCO groups in infra-red analysis compared to materials made from high amounts of polyols having a high level of oxypropylene groups at the same NCO-index. The materials according to the present invention show a higher impact and are less brittle.

Therefore the present invention is concerned with a process for preparing a solid polyisocyanurate polyurethane material which process comprises reacting a polyisocyanate and an isocyanate-reactive composition wherein the reaction is conducted at an isocyanate index of 150 to 1500, the polyisocyanate consists of a) 80-100% by weight of diphenylmethane diisocyanate comprising at least 40%, preferably at least 60% and most preferably at least 85% by weight of 4,4'-diphenylmethane diisocyanate and/or a variant of said diphenylmethane diisocyanate which variant is liquid at 25°C and has an NCO value of at least 20% by weight (polyisocyanate a), and b) 20-0% by weight of another polyisocyanate (polyisocyanate b), and wherein the isocyanate-reactive composition consists of a) 80-100% by weight of a polyether polyol having an average nominal functionality of 2-6, an average equivalent weight of 150-1000, an average molecular weight of 600-5000, an oxyethylene (EO) content of 75-100% by weight, and b) an 20-0% by weight of one or more other isocyanate-reactive compounds excluding water, the amount of polyol a) and compound b) being calculated on the total amount of this polyol a) and compound b).

In the context of the present invention the following terms have the following meaning :

1) isocyanate index or NCO index or index :

the ratio of NCO-groups over isocyanate-reactive hydrogen atoms present in a formulation, given as a percentage :

$$\frac{[\text{NCO}] \times 100}{[\text{active hydrogen}]} \qquad (\%).$$

In other words the NCO-index expresses the percentage of isocyanate actually used in a formulation with respect to the amount of isocyanate theoretically required for reacting with the amount of isocyanate-reactive hydrogen used in a formulation.

It should be observed that the isocyanate index as used herein is considered from the point of view of the actual polymerisation process preparing the material involving the isocyanate ingredient and the isocyanate-reactive ingredients. Any isocyanate groups consumed in a preliminary step to produce modified polyisocyanates (including such isocyanate-derivatives referred to in the art as prepolymers) or any active hydrogens consumed in a preliminary step (e.g. reacted with isocyanate to produce modified polyols or polyamines) are not taken into account in the calculation of the isocyanate index. Only the free isocyanate groups and the free isocyanate-reactive hydrogens present at the actual polymerisation stage are taken into account.

2) The expression "isocyanate-reactive hydrogen atoms" as used herein for the purpose of calculating the isocyanate index refers to the total of active hydrogen atoms in hydroxyl and amine groups present in the reactive compositions; this means that for the purpose of calculating the isocyanate index at the actual polymerisation process one hydroxyl group is considered to comprise one reactive hydrogen and one primary amine group is considered to comprise one reactive hydrogen.

3) Reaction system : a combination of components wherein the polyisocyanates are kept in one or more containers separate from the isocyanate-reactive components.

4) The expression "polyisocyanurate polyurethane material" as used herein refers to non-cellular products as obtained by reacting the mentioned polyisocyanates and isocyanate-reactive compositions in the presence of trimerization catalysts at a high index.

5) The term "average nominal hydroxyl functionality" is used herein to indicate the number average functionality (number of hydroxyl groups per molecule) of the polyol or polyol composition on the assumption that this is the number average functionality (number of active hydrogen atoms per molecule) of the initiator(s) used in their preparation although in practice it will often be somewhat less because of some terminal unsaturation.

6) The word "average" refers to number average unless indicated otherwise. Preferably the polyisocyanate a) is selected from 1) a diphenylmethane diisocyanate comprising at least 40%, preferably at least 60% and most preferably at least 85% by weight of 4,4'-diphenylmethane diisocyanate and the following preferred variants of such diphenylmethane diisocyanate ; 2) a carbodiimide and/or uretonimine modified variant of polyisocyanate 1), the variant having an NCO value of 20% by weight or more; 3) a urethane modified variant of polyisocyanate 1), the variant having an NCO value of 20% by weight or more and being the reaction product of an excess of polyisocyanate 1) and of a polyol having an average nominal hydroxyl functionality of 2-4 and an average molecular weight of at most 1000; 4) a prepolymer having an NCO value of 20% by weight or more and which is the reaction product of an excess of any of the aforementioned polyisocyanates 1-3) and of a polyol having an average nominal functionality of 2-6, an average molecular weight of 2000-12000 and preferably an hydroxyl value of 15 to 60 mg KOH/g, and 5) mixtures of any of the aforementioned polyisocyanates. Polyisocyanates 1) and 2) and mixtures thereof are preferred as polyisocyanate a).

Polyisocyanate 1) comprises at least 40% by weight of 4,4'-MDI. Such polyisocyanates are known in the art and include pure 4,4'-MDI and isomeric mixtures of 4,4'-MDI and up to 60% by weight of 2,4'-MDI and 2,2'-MDI.

It is to be noted that the amount of 2,2'- MDI in the isomeric mixtures is rather at an impurity level and in general will not exceed 2% by weight, the remainder being 4,4'-MDI and 2,4'-MDI. Polyisocyanates as these are known in the art and commercially available; for example Suprasec™ MPR ex Huntsman Polyurethanes, which is a business of Huntsman International LLC (who owns the Suprasec trademark).
The carbodiimide and/or uretonimine modified variants of the above polyisocyanate 1) are also known in the art and commercially available; e.g. Suprasec 2020, ex Huntsman Polyurethanes.

Urethane modified variants of the above polyisocyanate 1) are also known in the art, see e.g. The ICI Polyurethanes Book by G. Woods 1990, 2nd edition, pages 32-35. Aforementioned prepolymers of polyisocyanate 1) having an NCO value of 20% by weight or more are also known in the art. Preferably the polyol used for making these prepolymers is selected from polyester polyols and polyether polyols and especially from polyoxyethylene polyoxypropylene polyols having an average nominal functionality of 2-4, an average molecular weight of 2500-8000, and preferably an hydroxyl value of 15-60 mg KOH/g and preferably either an oxyethylene content of 5-25% by weight, which oxyethylene preferably is at the end of the polymer chains, or an oxyethylene content of 50-90% by weight, which oxyethylene preferably is randomly distributed over the polymer chains. Mixtures of the aforementioned polyisocyanates may be used as well, see e.g. The ICI Polyurethanes Book by G. Woods 1990, 2nd edition pages 32-35. An example of such a commercially available polyisocyanate is Suprasec 2021 ex Huntsman Polyurethanes.

The other polyisocyanate b) may be chosen from aliphatic, cycloaliphatic, araliphatic and, preferably, aromatic polyisocyanates, such as toluene diisocyanate in the form of its 2,4 and 2,6-isomers and mixtures thereof and mixtures of diphenylmethane diisocyanates (MDI) and oligomers thereof having an isocyanate functionality greater than 2 known in the art as "crude" or polymeric MDI (polymethylene polyphenylene polyisocyanates). Mixtures of toluene diisocyanate and polymethylene polyphenylene polyisocyanates may be used as well.

When polyisocyanates are used which have an NCO functionality of more than 2, the amount of such polyisocyanate used is such that the average NCO functionality of the total polyisocyanate used in the present invention is 2.0-2.2 preferably.

Polyether polyol a) having a high EO content is selected from those having an EO content of 75-100% by weight calculated on the weight of the polyether polyol. These polyether polyols may contain other oxyalkylene groups like oxypropylene and/or oxybutylene groups. These polyols have an average nominal functionality of 2-6 and more preferably of 2-4, an average equivalent weight of 150-1000 and a molecular weight of 600-5000, preferably of 600-3000. If the polyol contains oxyethylene groups and another oxyalkylene group like oxypropylene, the polyol may be of the type of a random distribution, a block copolymer distribution or a combination thereof Mixtures of polyols may be used. Methods to prepare such polyols are known and such polyols are commercially available; examples are Caradol™ 3602 from Shell, Lupranol™ 9205 from BASF, Daltocel F526 ex Huntsman Polyurethanes (Daltocel is a trademark of Huntsman International LLC) and G2005 ex Uniqema. Preferably they are used in an amount of 90-100% by weight.

The other isocyanate-reactive compounds b), which may be used in an amount of 0-20% by weight and preferably of 0-10% by weight, may be selected from chain extenders, cross-linkers, polyether polyamines, polyester polyols and polyether polyols (different from the above described ones) having a molecular weight of more than 500 and in particular from such other polyether polyols, which may be selected from polyoxypropylene polyols, polyoxyethylene polyoxypropylene polyols having an oxyethylene content of less than 75% by weight and polyoxyethylene polyoxypropylene polyols having a primary hydroxyl content of less than 70%. Preferred polyoxyethylene polyoxypropylene polyols are those having an oxyethylene content of 5-30% and preferably 10-25% by weight, wherein all the oxyethylene groups are at the end of the polymer chains (so-called EO-capped polyols) and those having an oxyethylene content of 60-90% by weight and having all oxyethylene groups and oxypropylene groups randomly distributed and a primary hydroxyl content of 20-60%, calculated on the number of primary and secondary hydroxyl groups in the polyol. Preferably these other polyether polyols have an average nominal functionality of 2-6, more preferably 2-4 and an average molecular weight of 2000-10000, more preferably of 2500-8000.

The isocyanate-reactive chain extenders, which have a functionality of 2, may be selected from amines, amino-alcohols and polyols; preferably polyols are used. Further the chain extenders may be aromatic, cycloaliphatic, araliphatic and aliphatic; preferably aliphatic ones are used. The chain extenders have a molecular weight of 500 or less. Most preferred are aliphatic diols having a molecular weight of 62-500, such as ethylene glycol, 1,3-propanediol, 2-methyl-1,3-propanediol, 1,4-butanediol, 1,5-pentanediol, 1,6-hexanediol, 1,2-propanediol, 1,3-butanediol, 2,3-butanediol, 1,3-pentanediol, 1,2-hexanediol, 3-methylpentane-1,5-diol, 2,2-dimethyl-1,3-propanediol, diethylene glycol, dipropylene glycol and tripropylene glycol, and aromatic diols and propoxylated and/or ethoxylated products thereof The cross-linkers are isocyanate-reactive compounds having an average molecular weight of 500 or less and a functionality of 3-8. Examples of such cross-linkers are glycerol, trimethylolpropane, pentaerythritol, sucrose, sorbitol, mono-, d i- and triethanolamine, ethylenediamine, toluenediamine, diethyltoluene diamine, polyoxyethylene polyols having an average nominal functionality of 3-8 and an average molecular weight of 500 or less like ethoxylated glycerol, trimethylol propane, pentaerythritol, sucrose and sorbitol having said molecular weight, and polyether diamines and triamines having an average molecular weight of 500 or less; most preferred cross-linkers are the polyol cross-linkers.

Still further the other isocyanate-reactive compounds may be selected from polyesters, polyesteramides, polythioethers, polycarbonates, polyacetals, polyolefins or polysiloxanes. Polyester polyols which may be used include hydroxyl-terminated reaction products of dihydric alcohols such as ethylene glycol, propylene glycol, diethylene glycol, 1,4-butanediol, neopentyl glycol, 1,6-hexanediol or cyclohexane dimethanol or mixtures of such dihydric alcohols, and dicarboxylic acids or their ester-forming derivatives, for example succinic, glutaric and adipic acids or their dimethyl esters, sebacic acid, phthalic anhydride, tetrachlorophthalic anhydride or dimethyl terephthalate or mixtures thereof. Polythioether polyols, which may be used, include products obtained by condensing thiodiglycol either alone or with other glycols, alkylene oxides, dicarboxylic acids, formaldehyde, amino-alcohols or aminocarboxylic acids. Polycarbonate polyols which may be used include products obtained by reacting diols such as 1,3-propanediol, 1,4-butanediol, 1,6-hexanediol, diethylene glycol or teraethylene glycol with diaryl carbonates, for example diphenyl carbonate, or with phosgene. Polyacetal polyols which may be used include those prepared by reacting glycols such as diethylene glycol, triethylene glycol or hexanediol with formaldehyde. Suitable polyacetals may also be prepared by polymerising cyclic acetals. Suitable polyolefin polyols include hydroxy-terminated butadiene homoand copolymers and suitable polysiloxane polyols include polydimethylsiloxane diols.

Mixtures of the aforementioned other isocyanate-reactive compounds may be used as well. Preferably the other isocyanate-reactive compounds are polyols selected from the above preferred ones.

The polyols may comprise dispersions or solutions of addition or condensation polymers in polyols of the types described above. Such modified polyols, often referred to as "polymer polyols" have been fully described in the prior art and include products obtained by the in situ polymerisation of one or more vinyl monomers, for example styrene and/or acrylonitrile, in the above polyether polyols, or by the in situ reaction between a polyisocyanate and an amino- and/or hydroxy-functional compound, such as triethanolamine, in the above polyol. Polyoxyalkylene polyols containing from 1 to 50% of dispersed polymer are particularly useful. Particle sizes of the dispersed polymer of less than 50 microns are preferred.

Still further the following optional ingredients may be used: catalysts enhancing the formation of urethane bonds like tin catalysts like tin octoate and dibutyltindilaurate, tertiary amine catalysts like triethylenediamine and imidazoles like dimethylimidazole and other catalysts like maleate esters and acetate esters; surfactants; fire retardants; smoke suppressants; UV-stabilizers; colorants; microbial inhibitors; organic and inorganic fillers, impact modifiers, plasticizers and internal mould release agents. Further external mould release agents may be used in the process according to the present invention.

Any compound that catalyses the isocyanate trimerisation reaction (isocyanurateformation) can be used as trimerisation catalyst in the process according to the present invention, such as tertiary amines, triazines and most preferably metal salt trimerisation catalysts.

Examples of suitable metal salt trimerisation catalysts are alkali metal salts of organic carboxylic acids. Preferred alkali metals are potassium and sodium, and preferred carboxylic acids are acetic acid and 2-ethylhexanoic acid. Most preferred metal salt trimerisation catalysts are potassium acetate (commercially available as Polycat 46 from Air Products and Catalyst LB from Huntsman Polyurethanes) and potassium 2-ethylhexanoate (commercially available as Dabco K15 from Air Products). Two or more different metal salt trimerisation catalysts can be used in the process of the present invention.

The metal salt trimerisation catalyst is generally used in an amount of up to 5% by weight based on the isocyanate-reactive composition, preferably 0.1 to 3% by weight. It may occur that the polyol used in the process according to the present invention still contains metal salt from its preparation which may then be used as the trimerisation catalyst or as part of the trimerisation catalyst.

The reaction to prepare the material is conducted at an NCO index of 150-1500. The materials are preferably made in a mould. The process may be conducted in any type of mould known in the art. Examples of such moulds are the moulds commercially used for making shoe parts like soccer shoes and ski- and skate boots, automotive parts, like arm-rests, door panels and back-shelves. Preferably the reaction is conducted in a closed mould. The ingredients used for making the material are fed into the mould at a temperature of from ambient temperature up to 80°C, the mould being kept at a temperature of from ambient temperature up to 150°C during the process. Demoulding time is relatively short despite the fact that preferably no isocyanate-reactive compounds, containing reactive amine groups, are used; depending on the amount of catalyst demould times may be below 10 minutes, preferably below 5 minutes, more preferably below 3 minutes and most preferably below 1 minute.

The moulding process may be conducted according to the reaction injection moulding (RIM) process and the cast moulding process. The process may also be conducted according to the RRIM (reinforced RIM) and SRIM (structural RIM) process.

In general, the isocyanate-reactive ingredients and catalysts may be pre-mixed, optionally together with the optional ingredients, before being brought into contact with the polyisocyanate.

The materials according to the invention are particularly suitable for use in applications where high stiffness, non-brittle, high impact resistant materials are desirable, like soccer shoe soles and ski-boots, and automotive parts like arm-rests, doorpanels, back-shelves and sun visors.

The present invention is illustrated by the following examples.

Examples 1 - 4

Suprasec 2020* and Daltocel F526** were dispensed into a mould (dispensing machine Krauss Maffei Comet 2020 high pressure piston machine, output was 300g/s). The mould was a steel mould having dimensions 30x60x0.3 cm and mounted in a Battenfeld press.

The temperature of the chemicals and of the mould was 35 and 85°C, respectively. Before use, the mould was treated with Acmos 35-5015 mould release agent. Demould time was 60 seconds. The amounts (in parts by weight) used and the physical properties of the polyisocyanurate polyurethane parts are given in below table.

| EXAMPLE | 1 | 2 | 3 | 4 |
|---|---|---|---|---|
| Suprasec 2020 | 65 | 50 | 60 | 70 |

(continued)

| EXAMPLE | 1 | 2 | 3 | 4 |
|---|---|---|---|---|
| Daltocel F526**** | 35 | 50 | 40 | 30 |
| water | 0.2 *** | - | - | - |
| Overall density, kg/m$^3$, DIN 53420 | 656 | 1211 | 1204 | 1165 |
| Hardness Shore D, DIN 53505 | 56 | 72 | 80 | 83 |
| Flexural modulus, GPa, DIN EN 63 | 0.75 | 0.84 | 1.80 | 2.35 |
| Stress at maximum load, MPa, DIN 53455 | 27 | 33 | 70 | 94 |
| Izod impact strength, kJ/m$^2$, ISO 180 | 10 | 71 | 34 | 14 |

* A uretonimine/carbodiimide-modified 4,4'-MDI having an NCO-content of 29.3% by weight and a uretonimine/carbodiimide content of about 27% by weight obtainable from Huntsman Polyurethanes. Suprasec is a trademark of Huntsman International LLC.
** A glycerol-initiated polyoxyethylene polyol having an OH-value of 140 mg KOH/g obtainable from Huntsman Polyurethanes. Daltocel is a trademark of Huntsman International LLC.
*** mixed in Daltocel F526.
**** Daltocel F526 contains enough Na/K-salt catalyst from its production; no additional catalyst needed.

Example 1 is not an example according to the invention.

## Claims

1. A process for preparing a solid polyisocyanurate polyurethane material, which process comprises reacting a polyisocyanate and an isocyanate-reactive composition, wherein the reaction is conducted at an isocyanate index of 150 to 1500 and in the presence of a trimerisation catalyst, wherein the polyisocyanate consists of a) 80-100% by weight of diphenylmethane diisocyanate comprising at least 40% by weight of 4,4'-diphenylmethane diisocyanate and/or a variant of said diphenylmethane diisocyanate which variant is liquid at 25°C and has an NCO value of at least 20% by weight (polyisocyanate a), and b) 20-0% by weight of another polyisocyanate (polyisocyanate b), and wherein the isocyanate-reactive composition consists of a) 80-100% by weight of a polyether polyol having an average nominal functionality of 2-6, an average equivalent weight of 150-1000, an average molecular weight of 600-5000, an oxyethylene (EO) content of 75-100% by weight, and b) 20-0% by weight of one or more other isocyanate-reactive compounds excluding water, the amount of polyol a) and compound b) being calculated on the total amount of this polyol a) and compound b).

2. Material made according to the process of claim 1.

## Patentansprüche

1. Verfahren zur Herstellung eines festen Polyisocyanurat-Polyurethan-Materials, wobei das Verfahren Umsetzen eines Polyisocyanats und einer Isocyanat-reaktiven Zusammensetzung umfasst, wobei die Reaktion bei einem Isocyanat-Index von 150 bis 1500 und in Gegenwart eines Trimerisierungskatalysators durchgeführt wird, wobei das Polyisocyanat aus a) 80-100 Gewichts-% Diphenylmethandiisocyanat, umfassend wenigstens 40 Gewichts-% 4,4'-Diphenylmethandiisocyanat und/oder eine Variante des genannten Diphenylmethandiisocyanats, wobei die Variante bei 25 °C flüssig ist und einen NCO-Wert von wenigstens 20 Gewichts-% hat (Polyisocyanat a), und b) 20-0 Gewichts-% eines anderen Polyisocyanats (Polyisocyanat b) besteht und wobei die Isocyanat-reaktive Zusammensetzung aus a) 80-100 Gewichts-% eines Polyetherpolyols, das eine durchschnittliche nominale Funktionalität von 2-6, ein durchschnittliches Äquivalentgewicht von 150-1000, ein durchschnittliches Molekulargewicht von 600-5000 hat, einen Oxyethylen (EO)-Gehalt von 75-100 Gewichts-% hat, und b) 20-0 Gewichts-% einer oder mehrerer anderer Isocyanat-reaktiver Verbindungen, ausgenommen Wasser, besteht, wobei die Menge von Polyol a) und Verbindung b), bezogen auf die Gesamtmenge aus diesem Polyol a) und Verbindung b), berechnet wird.

**2.** Material, das nach dem Verfahren gemäß Anspruch 1 hergestellt ist.

**Revendications**

**1.** Procédé pour préparer une matière solide du type polyisocyanurate-polyuréthanne, procédé qui comprend la réaction d'un polyisocyanate et d'une composition réactive avec les isocyanates, dans lequel la réaction est conduite à un indice d'isocyanate de 150 à 1500 et en présence d'un catalyseur de trimérisation, dans lequel le polyisocyanate consiste en a) 80 à 100 % en poids de diphénylméthane-diisocyanate comprenant au moins 40 % en poids de 4,4'-diphénylméthane-diisocyanate et/ou d'un variant dudit diphénylméthane-diisocyanate, variant qui est liquide à 25°C et qui a une teneur en NCO d'au moins 20 % en poids (polyisocyanate a), et b) 20 à 0 % en poids d'un autre polyisocyanate (polyisocyanate b), et dans lequel la composition réactive avec les isocyanates consiste en a) 80 à 100 % en poids d'un polyéther-polyol ayant une fonctionnalité nominale moyenne de 2 à 6, un poids équivalent moyen de 150 à 1000, un poids moléculaire moyen de 600 à 5000, une teneur en oxyéthylène (EO) de 75 à 100 % en poids, et b) 20 à 0 % en poids d'un ou plusieurs autres composés réactifs avec les isocyanates, en excluant l'eau, la quantité de polyol a) et de composé b) étant calculée sur la base de la quantité totale de ce polyol a) et de ce composé b).

**2.** Matière préparée par le procédé suivant la revendication 1.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0206370 A
- WO 9800450 A
- EP 608626 A
- WO 0210249 A
- EP 922063 A
- WO 0029459 A
- WO 0200752 A
- EP 1173495 A

- EP 745627 A
- EP 587317 A
- US 4247656 A
- US 4129697 A
- DE 10145458
- US 4661533 A
- US 4424288 A
- GB 1433642 A

**Non-patent literature cited in the description**

- The ICI Polyurethanes Book. G. Woods, 1990, 32-35